# EUROPEAN PATENT APPLICATION

(11) **EP 4 389 610 A1**
(43) Date of publication of application: **26.06.2024**
(21) Application number: 23214082.2
(22) Date of filing: 04.12.2023
(51) Int. Cl.: B64D 37/32

(54) **OXYGEN-DEPLETED VAPOR PHASE MOTOR COOLING**

(30) Priority: 21.12.2022 US 202218086131
(71) Applicant: Hamilton Sundstrand Corporation, Charlotte, NC 28217-4578 (US)
(72) Inventor: SURAWSKI, Eric, Hebron, CT (US); COLDWATE, Joseph K., Roscoe, IL (US)
(74) Representative: Dehns

(57) **Abstract**

Systems and methods for generating oxygen-depleted fluid are described. The systems include a compressor (310), a motor (322) operably coupled to the compressor (310) by a shaft and configured to rotationally drive the compressor (310) through the shaft, and an air separation module (320) configured to receive a supply air as an input and generate oxygen-rich fluid and oxygen-depleted fluid as an output. The oxygen-depleted fluid is directed to the motor (322) to provide cooling thereto.

## Description

### BACKGROUND

The subject matter disclosed herein generally relates to fuel tank inerting systems and, more particularly, to fuel tank inerting systems configured to supply inert gas, such as for onboard aircraft.

In general, aircraft pneumatic systems, including air conditioning systems, cabin pressurization and cooling, and fuel tank inerting systems are powered by engine bleed air. For example, pressurized air from an engine of the aircraft is provided to a cabin through a series of systems that alter the temperatures and pressures of the pressurized air. To power this preparation of the pressurized air, generally the source of energy is the pressure of the air itself.

The air bled from engines may be used for environmental control systems, such as used to supply air to the cabin and to other systems within an aircraft. Additionally, the air bled from engines may be supplied to inerting apparatuses to provide inert gas to a fuel tank. In other cases, the air may be sourced from compressed ram air.

Regardless of the source, typically the air for fuel tank inerting is passed through a porous hollow fiber membrane tube bundle known as an "air separation module." A downstream flow control valve is controlled or passively operated to apply back pressure on the air separation module to force some amount of air through the membrane as opposed to flowing through the tube. Oxygen passes more easily through the membrane, leaving only nitrogen enriched air to continue through the flow control valve into the fuel tank. Typically, air separation modules employ a dedicated ram air heat exchanger in conjunction with a bypass valve.

A motor may be used to drive a compressor of such systems, for the purpose of increasing a pressure of gases to be used to generate the inter gas. Electrical insulation systems associated with motor windings of such motors may degrade in the presence of oxygen. The degradation may be accelerated by increased operating temperature. Thus, insulation systems associated with air cooled motors can breakdown if cooling is insufficient. As such, improved motor cooling may provide advantages over prior configurations.

### BRIEF DESCRIPTION

According to some embodiments, systems for generating oxygen-depleted fluid are provided. The systems include a compressor, a motor operably coupled to the compressor by a shaft and configured to rotationally drive the compressor through the shaft, and an air separation module configured to receive a supply air as an input and generate oxygen-rich fluid and oxygen-depleted fluid as an output. The oxygen-depleted fluid is directed to the motor to provide cooling thereto.

In addition to one or more of the features described above, or as an alternative, further embodiments of the systems may include a heat exchanger arranged between the compressor and the air separation module, wherein the supply air is directed from the compressor, through the heat exchanger, and to the air separation module.

In addition to one or more of the features described above, or as an alternative, further embodiments of the systems may include a fuel tank, wherein the oxygen-depleted fluid is supplied to the fuel tank after providing cooling to the motor.

In addition to one or more of the features described above, or as an alternative, further embodiments of the systems may include a heat exchanger arranged between the motor and the fuel tank, wherein the heat exchanger is configured to cool the oxygen-depleted air prior to supplying into the fuel tank.

In addition to one or more of the features described above, or as an alternative, further embodiments of the systems may include that the air separation module is a membrane-type air separation module.

In addition to one or more of the features described above, or as an alternative, further embodiments of the systems may include a flow control valve configured to generate back pressure on the air separation module to cause the oxygen-rich fluid and oxygen-depleted fluid to separate within the air separation module.

In addition to one or more of the features described above, or as an alternative, further embodiments of the systems may include that the supply air is sourced from a cabin of an aircraft.

In addition to one or more of the features described above, or as an alternative, further embodiments of the systems may include that the oxygen-depleted fluid is nitrogen-rich air.

According to some embodiments, aircraft are provided having a fuel tank and a system for generating oxygen-depleted fluid to be supplied to the fuel tank. The system includes a compressor, a motor operably coupled to the compressor by a shaft and configured to rotationally drive the compressor through the shaft, and an air separation module configured to receive a supply air as an input and generate oxygen-rich fluid and oxygen-depleted fluid as an output. The oxygen-depleted fluid is directed to the motor to provide cooling thereto and then supplied to the fuel tank.

In addition to one or more of the features described above, or as an alternative, further embodiments of the aircraft may include a heat exchanger arranged between the compressor and the air separation module, wherein the supply air is directed from the compressor, through the heat exchanger, and to the air separation module.

In addition to one or more of the features described above, or as an alternative, further embodiments of the aircraft may include that the heat exchanger is arranged in a ram air duct of the aircraft.

In addition to one or more of the features described above, or as an alternative, further embodiments of the aircraft may include a second heat exchanger arranged between the motor and the fuel tank, wherein the second heat exchanger is configured to cool the oxygen-depleted air prior to supplying into the fuel tank.

In addition to one or more of the features described above, or as an alternative, further embodiments of the aircraft may include that the heat exchanger and the second heat exchanger are arranged within a single heat exchanger structure arranged in a ram air duct of the aircraft.

In addition to one or more of the features described above, or as an alternative, further embodiments of the aircraft may include a heat exchanger arranged between the motor and the fuel tank, wherein the heat exchanger is configured to cool the oxygen-depleted air prior to supplying into the fuel tank.

In addition to one or more of the features described above, or as an alternative, further embodiments of the aircraft may include that the air separation module is a membrane-type air separation module.

In addition to one or more of the features described above, or as an alternative, further embodiments of the aircraft may include a flow control valve configured to generate back pressure on the air separation module to cause the oxygen-rich fluid and oxygen-depleted fluid to separate within the air separation module.

In addition to one or more of the features described above, or as an alternative, further embodiments of the aircraft may include that the supply air is sourced from a cabin of the aircraft.

According to some embodiments, methods for generating oxygen-depleted fluid are provided. The methods include compressing a supply air with a motor-driven compressor, the motor-driven compressor comprising a motor operably coupled to a compressor by a shaft, directing the compressed supply air to an air separation module and generating oxygen-rich fluid and oxygen-depleted fluid at the air separation module, and directing at least a portion of the oxygen-depleted fluid to the motor to provide cooling thereto.

In addition to one or more of the features described above, or as an alternative, further embodiments of the methods may include directing the oxygen-depleted fluid from the motor to a fuel tank.

In addition to one or more of the features described above, or as an alternative, further embodiments of the methods may include cooling the compressed supply air with a heat exchanger prior to directing the compressed supply air to the air separation module.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1A is a schematic illustration of an aircraft that can incorporate various embodiments of the present disclosure;
FIG. 1B is a schematic illustration of a bay section of the aircraft of FIG. 1A;
FIG. 2 is a schematic illustration of a conventional inert gas generating system for an aircraft;
FIG. 3 is a schematic illustration of an inert gas generating system in accordance with an embodiment of the present disclosure; and
FIG. 4 is a flow process for cooling a motor of a motor-driven compressor in accordance with an embodiment of the present disclosure.

### DETAILED DESCRIPTION

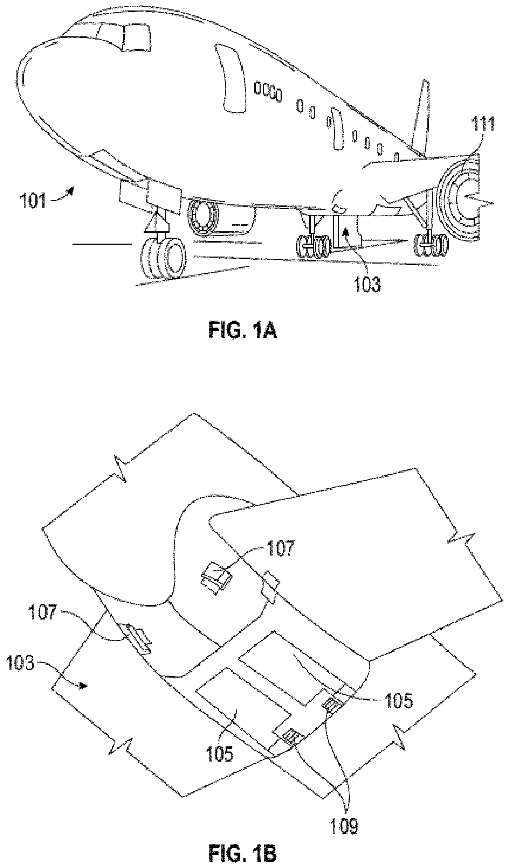

FIGS. 1A-1B are schematic illustrations of an aircraft 101 that can employ one or more embodiments of the present disclosure. As shown in FIGS. 1A-1B, the aircraft 101 includes bays 103 beneath a center wing box. The bays 103 can contain and/or support one or more components of the aircraft 101. For example, in some configurations, the aircraft 101 can include environmental control systems and/or fuel inerting systems within the bay 103. As shown in FIG. 1B, the bay 103 includes bay doors 105 that enable installation and access to one or more components (e.g., environmental control systems, fuel inerting systems, etc.). During operation of environmental control systems and/or fuel inerting systems of the aircraft 101, air that is external to the aircraft 101 can flow into one or more environmental control systems within the bay doors 105 through one or more ram air inlets 107. The air may then flow through the environmental control systems to be processed and supplied to various components or locations within the aircraft 101 (e.g., passenger cabin, fuel inerting systems, etc.). Some air may be exhausted through one or more ram air exhaust outlets 109.

Also shown in FIG. 1A, the aircraft 101 includes one or more engines 111. The engines 111 are typically mounted on wings of the aircraft 101, but may be located at other locations depending on the specific aircraft configuration. In some aircraft configurations, air can be bled from the engines 111 and supplied to environmental control systems and/or fuel inerting systems, as will be appreciated by those of skill in the art.

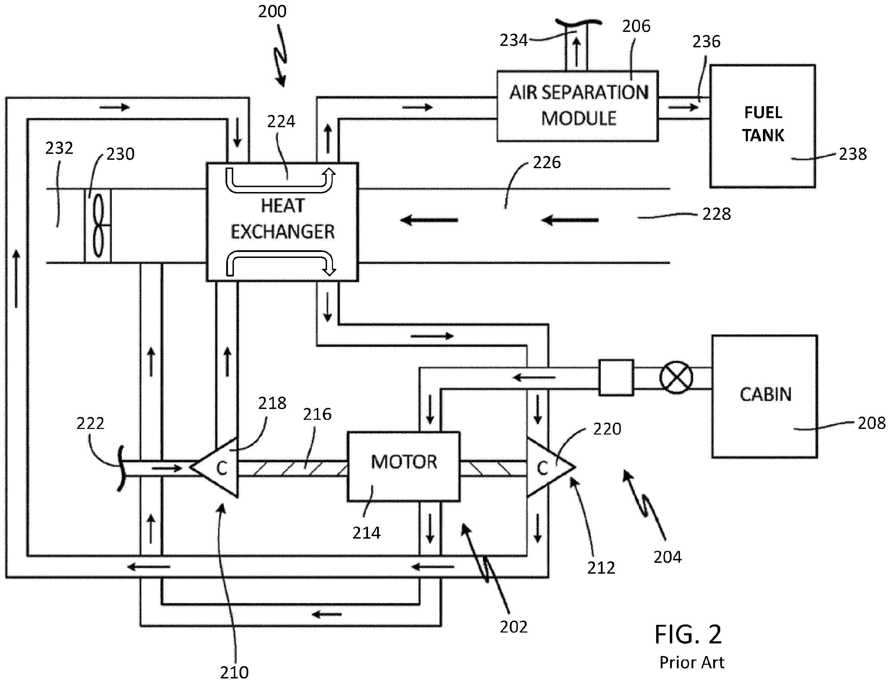

Referring now to FIG. 2, a schematic diagram of a conventional inert gas generating system 200 is shown. The inert gas generating system 200 includes a motor-driven compressor assembly 202. The inert gas generation system 200 includes a motor cooling system 204, the motor driven compressor assembly 202, and an air separation module 206 for generating an inert gas that can be supplied to a fuel tank or used for other purposes onboard an aircraft.

The inert gas generation system 200 may be configured to generate nitrogen-enriched air for delivery to fuel tanks on the aircraft for fuel tank inerting. The motor cooling system 204 is configured to provide cabin air from a cabin 208 to the motor driven compressor assembly 202. The motor driven compressor assembly 202 is configured to compress air and deliver the compressed air to the air separation module 206. The air separation module 206 is configured to create nitrogen-enriched air to be delivered to fuel tanks on the aircraft for fuel tank inerting. In this illustrative configuration, the motor driven compressor assembly 202 includes a first compressor 210, a second compressor 212, and a motor 214 operably connected to and configured to drive each of the first compressor 210 and the second compressor 212. The motor 214 is operably connected to the compressors 210, 212 by a shaft 216. A first compressor rotor 218 of the first compressor 210 is coupled to the shaft 216 at a first end and a second compressor rotor 220 of the second compressor 212 is mounted on the shaft 216 at a second end of the shaft 216. The motor 214 is configured to drive both the first compressor 210 and the second compressor 212 by rotating the shaft 216 and driving rotation of first compressor rotor 218 and the second compressor rotor 220. In some embodiments, the motor 214 may include a rotor and a stator.

The air separation module 206 is configured to receive treated air (e.g., pressure and/or thermally treated). For example, air may enter the inert gas generation system 200 through an inlet 222. The inlet 222 is configured to draws air from an ambient unpressurized source exterior of the aircraft or from a pressurized bleed source on an aircraft. For example, the inlet 222 may be fluidly coupled to a gas turbine engine of the aircraft, to the cabin (e.g., cabin 208), to a cargo bay, to an air duct (e.g., ram air duct), or the like. The air that enters inlet 222 is directed to the first compressor rotor 218 of the first compressor 210 and compressed or increased in pressure. The compressed air will then be directed to a heat exchanger 224 for thermal treatment of the compressed air. In this illustrative embodiment, the heat exchanger 224 is positioned or arranged in a ram air duct 226. The heat exchanger 224 is configured to cool the compressed air using ram air that is pulled into the ram air duct 224. In some embodiments, the ram air may be pulled through a ram air inlet 228 using a ram air fan 230 during operation on the ground while air may be forced into the ram air duct 226 during flight. The ram air flows across the heat exchanger 224 to cool the compressed air. The ram air is then dumped overboard through a ram air outlet 232.

The air that is cooled within the heat exchanger 224 is then directed to the second compressor rotor 220 of the second compressor 212. The second compressor rotor 220 will further compress the air. The compressed air will then be directed back to the heat exchanger 224. The heat exchanger 224 will further cool the compressed air with cooling ram air. Although shown with a single heat exchanger 224, it will be appreciated that the first and second passes through the heat exchanger 224 may be separated into two separate heat exchangers which may be arranged in series in the ram air duct 226. The cooled air is then directed to the air separation module 206. The air separation module 206 is configured to separate oxygen from the air, creating both oxygen-enriched air 234 and nitrogen-enriched air 236. The nitrogen-enriched air 236 is directed to a fuel tank 238 on the aircraft to be used for fuel tank inerting. The oxygen-enriched air 234 may be dumped overboard or used elsewhere on the aircraft.

The inert gas generation system 200 is operationally driven by the motor driven compressor assembly 202, which includes the motor cooling system 204. In this configuration, cabin air or air sourced from the cabin 208 of the aircraft is used for cooling air to cool the motor 214. In operation, air is pulled from the cabin 208 and is directed to the motor 214. The cabin air will flow through the stator windings of motor 214 to provide cooling thereto. The cabin air may then be dumped overboard through the ram air duct 226 and the ram air outlet 232 or may be used elsewhere onboard the aircraft.

FIG. 2 illustrates an example inert gas generation system 200 for fuel tank inerting. It will be appreciated that the arrangement, specific components, and other aspects are merely provided for illustrative and example purposes, and that other inert gas generation system may be configured to incorporate embodiments as described herein. For example, the order and arrangement of components on the flow paths of the inerting gas (e.g., ambient air) and/or the cooling gas (e.g., cabin air) may be different from that illustrated. Further, the specific sources (e.g., ambient and cabin air) may be different from that illustrated. Additionally, various other components or elements may be incorporated into the system, without departing from the scope of the present disclosure. For example, additional heat exchangers, compressors, expansion turbines, motors, valves, controllers, and the like may be incorporated into systems without departing from the scope of the present disclosure. In one non-limiting example, in an alternative configuration, a single compressor may be employed, rather than the two-compressor system shown in FIG. 2. In other embodiments, more than two compressors may be employed.

In the configuration of FIG. 2, the inert gas generation system 200 is motor driven and the motor requires cooling to ensure operational efficiencies. As shown and described, the motor 214 is cooled from cabin air sourced from the cabin 208 of the aircraft. Although this cooling configuration has conventionally provided sufficient cooling, there are some drawbacks associated with such a cooling scheme. For example, the air sourced from the cabin will have oxygen within the air. However, electrical insulation systems associated with motor windings may degrade in the presence of oxygen. The degradation of the insulation of the windings in the presence of oxygen may be accelerated by increased operating temperature. Thus, insulation systems associated with air cooled motors can breakdown if cooling is insufficient. That is, if the cooling airflow is insufficient, then the temperatures of the motor may rise to level that will cause undesirable degradation of the insulation of the windings.

In view of this, improved cooling schemes for motors onboard aircraft are provided. The motors may be part of fuel tank inerting systems, such as shown and described above or variations thereon. In accordance with embodiments of the present disclosure, oxygen-depleted fluid is used for motor cooling, thus reducing impacts to insulation system degradation, thereby slowing the insulation system breakdown and extending the life of the motor.

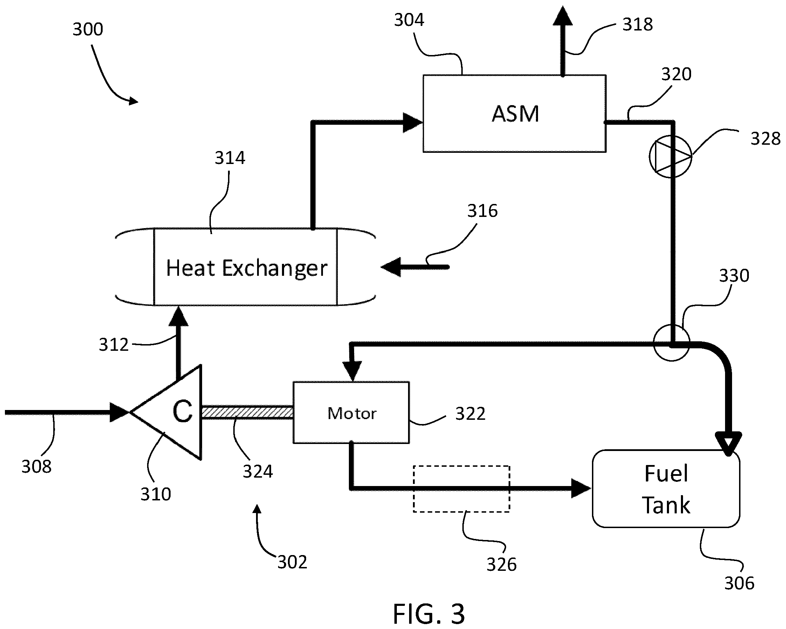

Referring now to FIG. 3, a schematic diagram of an inert gas generating system 300 in accordance with an embodiment of the present disclosure is shown. The inert gas generating system 300 includes a motor-driven compressor assembly 302 and an air separation module 304 for generating an inert gas that can be supplied to a fuel tank 306 or used for other purposes onboard an aircraft. The inert gas generating system 300 of FIG. 3 may be configured similar to that shown and described above with respect to FIG. 2, and thus various features may not be illustrated in FIG. 3 for simplicity and clarity. However, it will be appreciated that the inert gas generating system 300 may be a stand-alone system, configured with the components as illustrated, or configured with other components.

The inert gas generating system 300 is configured to receive an oxygen-rich supply air 308 (e.g., ambient air). The supply air 308 is directed into a compressor 310 of the motor-driven compressor assembly 302, where the supply air 308 is increased into pressure to become a pressurized air 312. The pressurized air 312 is then passed through a heat exchanger 314 and cooled by cooling air 316 (e.g., ram air). The cooled and pressurized air is directed to the air separation module 304, with an output from the air separation module 304 being an oxygen-rich fluid 318 and an oxygen-depleted fluid 320. The oxygen-rich fluid 318 may be dumped overboard or directed to other systems onboard the aircraft.

The oxygen-depleted fluid 320, which may be a vapor or gaseous state, is used for fuel tank inerting in the fuel tank 306. In accordance with embodiments of the present disclosure, the oxygen-depleted fluid 320 is directed to a motor 322 of the motor-driven compressor assembly 302. The oxygen-depleted fluid 320 is routed into and through the motor 322 to provide cooling to the motor 322 and components thereof (e.g., windings, insultation of windings, etc.). The motor 322 is operably coupled to the compressor 310 by a shaft 324 and the motor 322 is configured to rotationally drive the compressor 310. The oxygen-depleted fluid 320 is then directed to the fuel tank 306 to provide inert gas thereto.

By cooling the motor with an oxygen-depleted fluid, there is less oxygen available to cause insulation system degradation. As a result, the motor 322 may have improved like due to a slowing of the insulation system breakdown and thus extending the life of the motor 322. The oxygen-depleted fluid may be a gaseous state fluid. In some embodiments, such as when the source air is ambient, and oxygen is removed at the air separation module 304, the oxygen-depleted fluid may be a nitrogen-rich air.

In some embodiments of the present disclosure, a heat exchanger 326 may be arranged downstream from the motor 322 along a flow path of the oxygen-depleted fluid 320. The heat exchanger 326 may be arranged within the same duct or cooling flow as the heat exchanger 314 that receives the compressed air 312. In some embodiments, the heat exchanger 314 may provide both cooling functions (e.g., for the compressed air 312 and the oxygen-depleted fluid 320), using two separate flow paths through the heat exchanger 314. The second heat exchanger 326 may be provided to ensure that the inert gas (oxygen-depleted fluid 320) is at appropriate temperatures when entering the fuel tank 306 and because the oxygen-depleted fluid 320 may pick up heat within the motor 322 when providing cooling thereto.

The air separation module 304 may be a membrane-type air separation module. In some such embodiments, the air separation module 304 may include a porous hollow fiber membrane tube bundle. In some embodiments, a downstream flow control valve 328 may be controlled or passively operated to apply back pressure on the air separation module 304 to force some amount of air through the membrane as opposed to flowing through the tube. Oxygen passes more easily through the membrane, leaving only oxygen-depleted (e.g., nitrogen-enriched) fluid to continue through the flow control valve to the fuel tank 306. Although described as a membrane-type air separation module, such specific configuration is not intended to be limiting, but rather the description is provided as one example of an air separation module that may be implemented in accordance with embodiments of the present disclosure.

In some embodiments, in accordance with the present disclosure, only a portion of the oxygen-depleted fluid may used for motor cooling. For example, in some embodiments, the inert gas generating system 300 may include an optional flow diverter 330 arranged downstream from the air separation module 320 and upstream from the motor 322 and fuel tank 306. The flow diverter 330 may be provided to direct a portion of the oxygen-depleted fluid to the motor 322 to provide cooling thereto, while the remainder of the oxygen-depleted fluid may be supplied directly to the fuel tank 306.

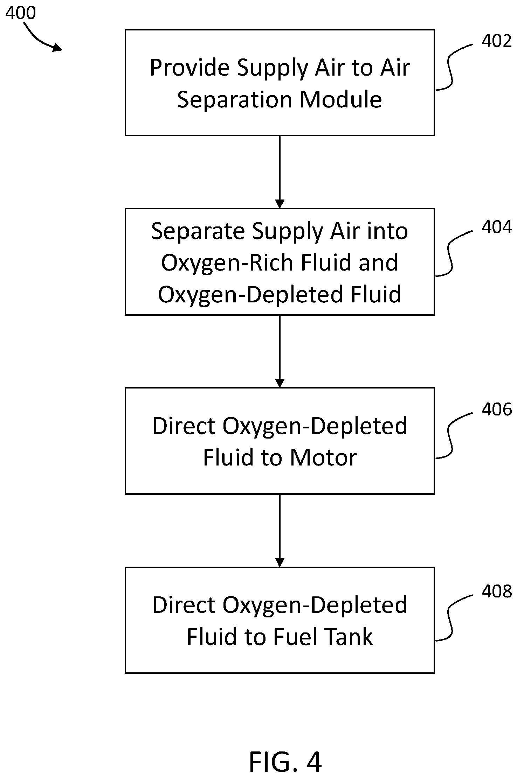

Referring now to FIG. 4, a flow process 400 for generating an oxygen-depleted fluid and cooling a motor in accordance with an embodiment of the present disclosure is shown. The flow process 400 may be performed using a fuel tank inerting system, an inert gas generation system, an oxygen-depleted air generation system, or the like. The flow process 400 may be performed onboard an aircraft, such as shown and described above, and may be employed to generate and supply an inert gas (e.g., oxygen-depleted fluid) to a fuel tank.

At block 402 of flow process 400, supply air is provided to an air separation module. The supply air may be extracted from any location onboard an aircraft, but the selection of supply air may be made to ensure that an inert gas is present in such supply air and such inert gas may be separated from other gases of the supply air (e.g., oxygen). The supply air may be pre-treated in both temperature and/or pressure. For example, a compressor, such as a motor-driven compressor, may increase a pressure of the supply air at a location upstream from the air separation module. The supply air may also be thermally treated, such as cooled in a heat exchanger, as illustrated above. The air separation module may be a membrane-type air separation module.

At block 404, the supply air is separated into an oxygen-rich fluid (e.g., gas) and an oxygen-depleted fluid (e.g., gas). The oxygen-rich fluid may be directed to other systems of the aircraft or may be dumped overboard.

At block 406, the oxygen-depleted fluid is directed to the motor of the motor-driven compressor of the inert gas generation system. The oxygen-depleted fluid, which may be in vapor phase, may be directed through cooling paths of the motor to provide cooling to windings and/or insulation of windings of the motor.

At block 408, after providing cooling to the motor, the oxygen-depleted fluid is directed to a fuel tank to supply an inert gas (the oxygen-depleted fluid) to a fuel tank ullage space.

In accordance with embodiments of the present disclosure, supply air that is used to generate an inert gas is compressed by a motor-driven compressor. After the supply air is separated and an oxygen-depleted fluid is obtained from the supply air, the oxygen-depleted fluid may be directed back to the motor of the motor-driven compressor. The oxygen-depleted fluid may then be directed into a fuel tank. It will be appreciated that the fluids (upstream and downstream from the air separation module) may be directed through multiple other components, and thus the flow process 400 of FIG. 4 is merely provided as a minimum-steps flow process and other steps and/or order of steps may be implemented without departing from the scope of the present disclosure.

Advantageously, embodiments described herein provide for improved cooling schemes for motors of compressor systems. In the case of inert gas generation, a motor-driven compressor may be used to compress air to generate an oxygen-depleted fluid. That same oxygen-depleted fluid may then be used to provide cooling to the motor that drives the compressor. Accordingly, an oxygen-depleted cooling fluid may be used to cool the motor, thus providing cooling benefits without the risks associated with using oxygen-rich air, such as cabin air or the like.

The use of the terms "a," "an," "the," and similar references in the context of description (especially in the context of the following claims) are to be construed to cover both the singular and the plural, unless otherwise indicated herein or specifically contradicted by context. The modifier "about," "substantially," and/or "approximately" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

While the invention has been described in detail in connection with only a limited number of embodiments, it should be readily understood that the invention is not limited to such disclosed embodiments. Rather, the invention can be modified to incorporate any number of variations, alterations, substitutions, combinations, sub-combinations, or equivalent arrangements not heretofore described, but which are commensurate with the spirit and scope of the invention. Additionally, while various embodiments of the invention have been described, it is to be understood that aspects of the invention may include only some of the described embodiments.

Accordingly, the present disclosure is not to be seen as limited by the foregoing description, but is only limited by the scope of the appended claims.

## Claims

1. A system for generating oxygen-depleted fluid, the system comprising:
a compressor (310);
a motor (322) operably coupled to the compressor (310) by a shaft and configured to rotationally drive the compressor (310) through the shaft; and
an air separation module (320) configured to receive a supply air as an input and generate oxygen-rich fluid and oxygen-depleted fluid as an output;
wherein the oxygen-depleted fluid is directed to the motor (322) to provide cooling thereto.

2. The system of claim 1, further comprising a heat exchanger arranged between the compressor (310) and the air separation module (320), wherein the supply air is directed from the compressor (310), through the heat exchanger, and to the air separation module (320).

3. The system of claim 1 or 2, further comprising a fuel tank, wherein the oxygen-depleted fluid is supplied to the fuel tank after providing cooling to the motor (322), and optionally further comprising a heat exchanger arranged between the motor (322) and the fuel tank, wherein the heat exchanger is configured to cool the oxygen-depleted air prior to supplying into the fuel tank.

4. The system of any preceding claim, wherein the air separation module (320) is a membrane-type air separation module (320), and optionally further comprising a flow control valve configured to generate back pressure on the air separation module (320) to cause the oxygen-rich fluid and oxygen-depleted fluid to separate within the air separation module (320).

5. The system of any preceding claim, wherein the supply air is sourced from a cabin of an aircraft, and/or wherein the oxygen-depleted fluid is nitrogen-rich air.

6. An aircraft comprising:
a fuel tank; and
a system for generating oxygen-depleted fluid to be supplied to the fuel tank, the system comprising:
a compressor (310);
a motor (322) operably coupled to the compressor (310) by a shaft and configured to rotationally drive the compressor (310) through the shaft; and
an air separation module (320) configured to receive a supply air as an input and generate oxygen-rich fluid and oxygen-depleted fluid as an output;
wherein the oxygen-depleted fluid is directed to the motor (322) to provide cooling thereto and then supplied to the fuel tank.

7. The aircraft of claim 6, further comprising a heat exchanger arranged between the compressor (310) and the air separation module (320), wherein the supply air is directed from the compressor (310), through the heat exchanger, and to the air separation module (320).

8. The aircraft of claim 7, wherein the heat exchanger is arranged in a ram air duct of the aircraft.

9. The aircraft of claim 7, further comprising a second heat exchanger arranged between the motor (322) and the fuel tank, wherein the second heat exchanger is configured to cool the oxygen-depleted air prior to supplying into the fuel tank, and optionally wherein the heat exchanger and the second heat exchanger are arranged within a single heat exchanger structure arranged in a ram air duct of the aircraft.

10. The aircraft of any of claims 6 to 9, further comprising a heat exchanger arranged between the motor (322) and the fuel tank, wherein the heat exchanger is configured to cool the oxygen-depleted air prior to supplying into the fuel tank.

11. The aircraft of any of claims 6 to 10, wherein the air separation module (320) is a membrane-type air separation module (320), and optionally . further comprising a flow control valve configured to generate back pressure on the air separation module (320) to cause the oxygen-rich fluid and oxygen-depleted fluid to separate within the air separation module (320).

12. The aircraft of any of claims 6 to 11, wherein the supply air is sourced from a cabin of the aircraft.

13. A method for generating oxygen-depleted fluid, the method comprising:
compressing a supply air with a motor-driven compressor, the motor-driven compressor comprising a motor (322) operably coupled to a compressor (310) by a shaft;
directing the compressed supply air to an air separation module (320) and generating oxygen-rich fluid and oxygen-depleted fluid at the air separation module (320); and
directing at least a portion of the oxygen-depleted fluid to the motor (322) to provide cooling thereto.

14. The method of claim 14, further comprising directing the oxygen-depleted fluid from the motor (322) to a fuel tank.

15. The method of claim 14 or 15, further comprising cooling the compressed supply air with a heat exchanger prior to directing the compressed supply air to the air separation module (320).
